Europäisches Patentamt

European Patent Office

Office européen des brevets

(11) Publication number: **0 396 819**
**A2**

# EUROPEAN PATENT APPLICATION

(21) Application number: **89121725.9**

(22) Date of filing: **24.11.89**

(51) Int. Cl.5: **B65H 18/00**

(30) Priority: **09.05.89 US 349685**

(43) Date of publication of application:
**14.11.90 Bulletin 90/46**

(84) Designated Contracting States:
**DE FR GB**

(71) Applicant: **Hewlett-Packard Company**
**3000 Hanover Street**
**Palo Alto California 94304(US)**

(72) Inventor: **Olson, Renee C.**
**56 Florence Street**
**Hudson, MA(US)**

(74) Representative: **Schoppe, Fritz, Dipl.-Ing.**
**Seitnerstrasse 42**
**D-8023 Pullach(DE)**

(54) **Passive paper takeup for rolled paper.**

(57) An apparatus for passively rolling a strip of paper (12) is disclosed. The apparatus is generally used with a strip chart recorder. As the strip of paper (12) discharges from the recorder housing (16), it is fed into a guide (16) which guides the paper (12) into a cylindrically shaped paper container (40). The guide (46) stiffens the paper (12) by imparting a slight bow across the paper (12). The paper (12) has a predetermined direction of curvature, imparted to the paper (12) by being stored in a roll (34). The stiffening of the paper (12) by the guide (46) allows the strip of paper (12) to be pushed into the cavity (44) and ensures that the paper (12) will curl in the predetermined direction of curvature as it enters the cylindrical cavity (44).

FIG. 1

## PASSIVE PAPER TAKEUP FOR ROLLED PAPER

### FIELD OF THE INVENTION

This invention relates to the field of paper takeup devices for printers and recorders and, more particularly, to passive paper takeup devices.

### BACKGROUND OF THE INVENTION

Recorders and printers often use paper in long strips. A long strip of paper obviates feeding individual sheets of paper to the recorder or printer, thereby speeding the printing function. Commonly, the strip of paper is supplied in a fanfold configuration or in a roll. A mechanism unfolds or unrolls the paper and feeds it through the printing mechanism. After printing, the paper may fall freely into a box or on the floor. Fanfold paper can refold itself naturally. However, unrolled paper naturally falls into a jumbled pile. To prevent this, electrically powered paper takeup devices which reroll the strip of paper have been used. However, these takeups are disadvantageous in that they use further electrical energy, and they occupy additional space.

### SUMMARY OF THE INVENTION

The present invention provides a compact paper takeup device that rolls a strip of paper passively without electrical power. The apparatus is especially suitable for use with a strip chart recorder. As the paper discharges from the recorder housing, it is fed into a guide which guides the paper into a cylindrically shaped paper container. The guide stiffens the paper by imparting a slight bow across the paper. The stiffening allows the paper to be pushed into the cavity by the feeding of the paper into the guide. As the paper enters the cylindrical cavity, it follows the contour of the cylindrical inner surface to form a roll. Often the paper has a predetermined direction of curvature or natural curl imparted to the paper by initial storage in a roll. The natural curl helps the paper curl in the predetermined direction of curvature as it enters the cylindrical cavity.

### DESCRIPTION OF THE DRAWINGS

The invention will be more fully understood from the following detailed description taken in conjunction with the accompanying drawings in which:

Fig. 1 is a perspective view of the passive paper takeup device of the present invention; and

Fig. 2 is a cross-sectional view of the invention of Fig. 1.

### DETAILED DESCRIPTION OF THE INVENTION

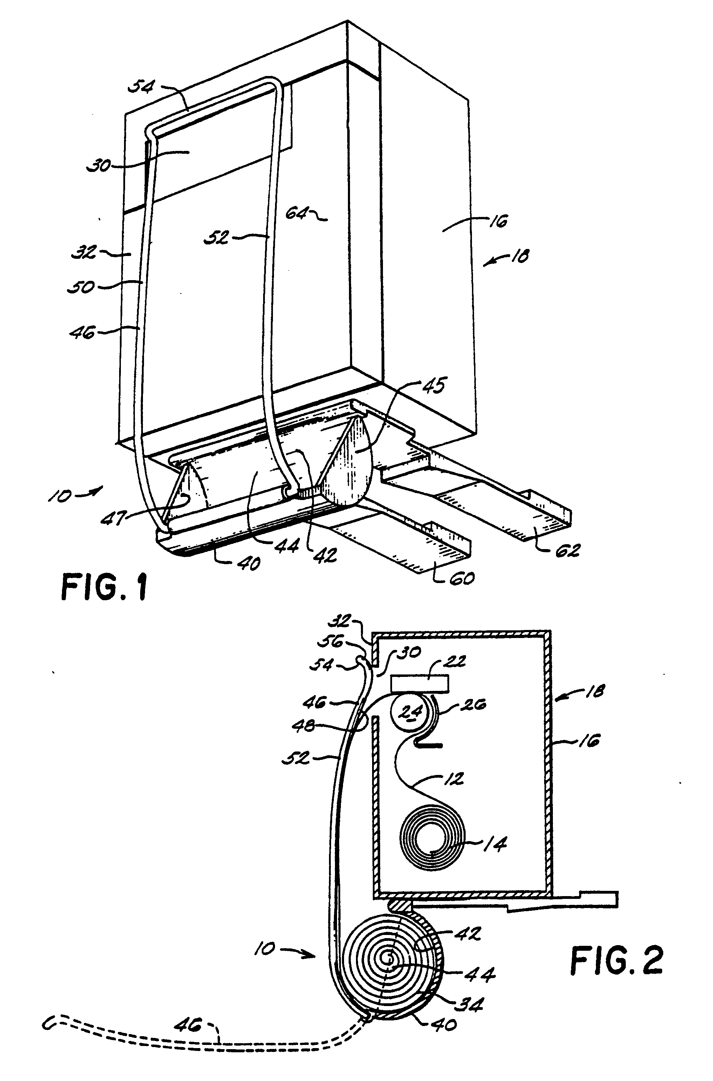

The passive paper takeup of the present invention is shown generally at 10 without paper in Fig. 1 and with paper in Fig. 2. Strip of paper 12 is stored in a roll 14 which, as shown in Fig. 2, has been mounted inside the housing 16 of a recorder or printer shown generally at 18. Roll 14 may be mounted within the housing by any manner known in prior art. Housing 16 also contains printhead 22, platen/drive roller 24, and paper bale 26. A conventional feed mechanism, not shown, feeds the strip of paper 12 from roll 14, under bale 26, and around platen 24 to printhead 22. Paper 12 exits the recorder housing 16 through opening 30.

Outside housing 16, paper 12 is guided by guide 46 downward along interior surface 48 of guide 46 (exterior to wall 32 of housing 16). Below housing 16, the strip of paper 12 is formed into a second roll 34. Roll 14 imparts a natural curl or direction of curvature to the strip of paper. Paper 12 is curled in this same direction in roll 34.

As best shown in Fig. 2, the paper is rolled into roll 34 in paper container 40. Paper container 40 has partially cylindrically shaped inner surface 42 forming a cavity 44. Side walls 45, 47 may be provided to prevent the paper from slipping out of the sides of container 40. To get the loose paper to curl into the cavity 44, it must be "pushed". Pushing paper is ordinarily difficult, similar to pushing a rope. However, if a slight bow is placed across the width of the paper, the paper is stiffened and can be pushed sufficiently to drive it into cavity 44. The natural curl on the paper eases the passage into the cylindrical cavity, since the paper naturally follows the inner cylindrical surface of the cavity.

Guide 46 is used to place a bow across the paper. Guide 46 preferably comprises a wireform having a first member 50 and a second member 52 extending upwardly from the ends of paper container 40. A cross member 54 joins members 50 and 52 at their upper ends just above opening 30 in housing 16 through which paper 12 exits. Members 50 and 52 are spaced apart slightly less than the width of the paper and are spaced close to wall 32 of housing 16. Guide 46 preferably is angled toward wall 32 of housing 16 such that the upper end 56 of guide 46 rests against wall 32 as shown in Fig. 2.

When paper 12 exits housing 16, it contacts members 50 and 52 of guide 46, which force paper 12 downward toward container 40. Frictional pressure from members 50 and 52 along the longitudinal edges of the strip of paper tends to put a bow across the width of the strip of paper. The bow is concave toward wall 32 of housing 16 and convex outward. The bow may be very slight, barely or not at all visible to the eye.

Once the paper reaches paper container 40, the bow across the width of the strip of paper is released. The paper starts to curl in the longitudinal direction, following the natural curl imparted by storage in roll 14. The bowed portion of strip 12 stiffens the paper, so that feeding paper into the guide 46 may continue to push the paper into cavity 44. In this manner, a paper takeup requiring minimal space and no electrical power, in addition to the power to run the recorder, is provided.

The passive paper takeup of the present invention is suitable for applications requiring relatively small widths of paper, as in strip chart recorders. As shown in Fig. 1 the housing 16 of recorder 18 may include clips 60, 62 which clip the recorder onto another device. The passive paper takeup of the present invention, by virtue of its compact design, may readily be molded integrally with the clips if desired.

The housing 16 may include a door 64 in wall 32 to access the interior of the recorder, for example to change paper rolls. As shown by dotted lines in Fig. 2, wireform guide 46 preferably is movable to allow easy access to door 64. For example, detents, not shown may be provided on container 40 to hold guide 46 in the upright position.

The invention is not to be limited by what has been particularly shown and described except as indicated by the appended claims.

## Claims

1. An apparatus for passively rolling a strip of paper, comprising:
a member having a cavity therein and an entrance to the cavity configured to allow passage of the strip of paper, the cavity having a cylindrically shaped inner surface configured to contain the rolled strip of paper;
means for passively rolling the paper within the cavity, comprising means for guiding the strip of paper into the cavity through the entrance and means for forcing the paper to follow the contour of the inner cylindrically shaped surface upon entering the cavity; and
means for feeding the paper to the rolling means.

2. The apparatus of claim 1, wherein the forcing means includes means for stiffening the paper.

3. The apparatus of claim 1, wherein the forcing means comprises means for forming a bow in the strip of paper to stiffen the paper prior to entering the cavity.

4. The apparatus of claim 1, wherein the paper has a predetermined direction of curvature, and the forcing means forces the paper to roll in the predetermined direction of curvature upon entering the cavity.

5. The apparatus of claim 4, wherein the predetermined direction of curvature defines a concave side of the paper and the forcing means further comprises means for forming a bow in the strip of paper to stiffen the paper prior to entering the cavity, the bow being concave on the concave side of the paper as defined by the predetermined curvature.

6. An apparatus for rolling a strip of paper having a predetermined direction of curvature comprising:
means for supporting a roll of paper prior to unrolling;
means for unrolling the roll of paper; and
means for rerolling the paper in the predetermined direction of curvature, comprising a paper container having a partially cylindrically shaped cavity for containing the roll of paper, means for guiding the paper into the cavity, and means for stiffening the paper to follow the contour of the cylindrically shaped cavity in the predetermined direction of curvature upon entering the cavity.

7. The apparatus of claim 6, further comprising a housing, wherein the paper supporting means and the unrolling means are disposed within the housing.

8. The apparatus of claim 7, wherein the rerolling means is mounted on the outside of the housing.

9. The apparatus of claim 8, wherein the housing includes an opening through which the unrolled paper exits the housing.

10. The apparatus of claim 9, wherein the guiding means comprises a guiding member extending along and spaced from the outside of the housing from a location proximate the opening in the housing to the cavity, to define a path for the unrolled paper between the guiding member and the housing, and from the opening in the housing to the cavity.

11. The apparatus of claim 10, wherein the guiding member is a U-shaped wire frame.

12. The apparatus of claim 10, wherein the guiding member is movably mounted on the paper container.

13. The apparatus of claim 9, wherein the stiffening means comprises two longitudinal members spaced apart a distance slightly less than the width of the strip of paper and extending between the paper container and the opening in the housing to contact the strip of paper proximate its longitudinal edges to impart a bow to a portion of the strip of paper passing from the opening in the housing to the cavity.

14. The apparatus of claim 6, wherein the paper container further includes a wall on each end of the partially cylindrically shaped cavity.

FIG. 1

FIG. 2